# FASCICULE DE BREVET EUROPEEN

(11) **EP 2 232 881 B1**
(45) Date de publication et mention de la délivrance du brevet: **25.05.2016**
(21) Numéro de dépôt: 08870754.2
(22) Date de dépôt: 31.12.2008
(51) Int. Cl.: H04N 7/52

(54) **DECODEUR DE DONNEES VIDEO ET PROCEDE DE DECODAGE DE DONNEES VIDEO AVEC SYNCHRONISATION DE LA PRÉSENTATION DES SOUSTITRES**
VIDEODATENDECODER UND VERFAHREN ZUR DECODIERUNG VON VIDEODATEN
VIDEO DATA DECODER AND METHOD FOR DECODING VIDEO DATA

(30) Priorité: 18.01.2008 FR 0850347
(43) Date de publication de la demande: 29.09.2010
(73) Titulaire: SAGEMCOM BROADBAND SAS, 92500 Rueil Malmaison (FR)
(72) Inventeur: LEGRAND, Mickaël, F-95220 Herblay (FR)
(74) Mandataire: Lebkiri, Alexandre
(86) Numéro de dépôt international: PCT/FR2008/052436
(87) Numéro de publication internationale: WO 2009/090353

(56) Documents cités:
- EP-A- 1 443 773

## Description

### Domaine technique de l'invention

La présente invention concerne un décodeur de données vidéo et un procédé de décodage de ces données. L'invention s'applique au domaine des décodeurs de télévision numérique visant à décoder de données vidéo et comportant des moyens de synchronisation des données vidéo, des données de sous-titrage et de données audio (lorsque ces dernières sont présentes), ces données étant enregistrées dans un espace de stockage (du type disque dur) sous forme multiplexée. On notera que le terme « sous-titrage » utilisé par la suite désigne tout type de données textuelles destinées à accompagner les données vidéo ; il peut s'agir par exemple de sous-titres définis selon la norme DVB pour (« Digital Video Broadcasting » en anglais) mais aussi de données utilisant la norme télétexte (transportées sur des paquets DVB par exemple).

### Arrière-plan technologique de l'invention

Dans un décodeur de télévision numérique comportant un disque dur, différents flux de type audio, vidéo et télétexte/sous-titres tels que notamment décrits dans les normes DVB peuvent être stockés sous forme de flux partiel sur le disque dur, afin d'être rejoués et décodés postérieurement.

Ces différents flux sont habituellement transportés dans un flux transport utilisant par exemple la norme DVB, démultiplexé par un démultiplexeur, et transmis respectivement à des décodeurs élémentaires pour décodages audio, vidéo, télétexte ou sous-titres. Les flux transmis à un organe de décodage peuvent être destinés à être utilisés de manière synchrone. Ceci est par exemple le cas des informations audio et vidéo qui sont liées entre elles par des informations de synchronisation temporelles sous la forme d'horodatages de présentation ou PTS (« Présentation Time Stamps» en anglais »). L'exploitation de ces informations, combinée à la mise à jour d'une horloge locale STC (« System Time Clock » en anglais) au moyen de signaux de référence temporelle notés PCR (pour « Program Clock Reference » en anglais) permet d'afficher des images de façon synchrone avec le son. Les références temporelles PCR sont insérées dans le flux de données en synchronisme avec une horloge qui cadence le codage des données. Elles permettent à l'aide d'un synthétiseur de fréquences ou d'un oscillateur commandé en tension noté VCXO (pour « Voltage Controlled Chrystal Oscilator ») de générer coté décodage l'horloge STC. Les horodatages PTS permettent de synchroniser la présentation des paquets de données par rapport à l'horloge STC. Bien que le décodage vidéo et le décodage audio soient des processus séparés, chaque paquet vidéo et chaque paquet audio est synchronisé avec l'horloge STC de sorte qu'ils sont présentés à un même instant déterminé. En d'autres termes, les paquets vidéo et les paquets audio sont chacun synchronisés avec l'horloge STC et sont donc synchronisés entre eux. Cette méthode est bien connue et implémentée dans les décodeurs numériques.

On notera que la transmission des informations de synchronisation PTS n'est pas obligatoire dans le cas des données de sous-titrage/télétexte. La synchronisation pour de telles données, dont le besoin est bien moins précis que dans le cas de l'audio, se réalise par un décodage quasiimmédiat (quelques dizaines de ms au maximum) des données reçues en sortie de démultiplexeur. De ce fait, dans le cadre de l'exploitation de flux sous-titres en mode de décodage direct d'après un signal antenne, la présence ou non d'informations de synchronisation dans ces flux n'a pas grand intérêt, la prise en compte d'une erreur moyenne suffisant à gagner en précision.

Toutefois, la mise en oeuvre d'une telle solution pose un certain nombre de difficultés dans le cas d'un décodeur comportant un espace de stockage de données.

Ainsi, le principe généralement utilisé lors de la relecture de données rejouées d'un espace de stockage consiste à tamponner (c'est-à-dire mettre en mémoire tampon) les données utilisés, en remplissant notamment au maximum la mémoire tampon de données vidéo. On utilisera indifféremment par la suite le terme « mémoire tampon » ou le terme « buffer ». Les buffers utilisés sont du type « premier entré - premier sorti » FIFO (« First In First Out » en anglais). De cette manière, un éventuel défaut de lecture sur l'espace de stockage (telle qu'une erreur de lecture disque par exemple) entraînant un délai dans la lecture de ces données n'est pas visible. Ainsi, l'ensemble des données audio, vidéo, sous-titres relues à partir d'un espace de stockage est fourni au démultiplexeur, avec un asservissement dirigé par le niveau de remplissage du buffer de décodage vidéo.

Dans le cas où aucun horodatage PTS avant envoi n'est implémenté pour les sous-titres, ceux-ci sont décodés dès qu'ils sont disponibles en sortie de démultiplexeur, de la même manière qu'en réception directe. Des données vidéo non encore décodées risquent donc d'être encore présentes dans le buffer de décodage vidéo, alors que les sous-titres correspondants sont déjà en cours d'affichage. En pratique, la taille du buffer de décodage vidéo et les débits de compression vidéo habituels sont tels qu'il est possible d'avoir plusieurs secondes d'écart entre ces sous-titres et l'image non encore décodée. La cohérence d'affichage des sous-titres par rapport à la vidéo est alors sérieusement compromise. Dès lors, on conçoit bien que le fait de jouer immédiatement (sans mise en mémoire tampon) les sous-titres sans horodatage de présentation PTS ne pose pas de problème majeur lorsque les données sont jouées en « live » mais que cette absence de bufferisation pose de sérieux problèmes en cas de lecture des données à partir d'un disque dur incorporé au décodeur. On notera que le terme « live » utilisé par la suite désigne une visualisation en direct, à partir du flux et non à partir du disque dure.

En outre, en l'absence d'horodatages de présentation associés aux données de sous-titrage, les problèmes mentionnés ci-dessus sont encore accrus en mode ralenti dans la mesure où le retard entre l'affichage des sous-titres et celui des images vidéo est encore plus grand.

### Description générale de l'invention

Dans ce contexte, la présente invention vise à fournir un décodeur de données vidéo et de données de sous-titrage associées auxdites données vidéo provenant d'un espace de stockage, permettant de synchroniser les données vidéo et les données de sous-titrage de façon efficace, simple et économique.

A cette fin, l'invention propose un décodeur de données vidéo et de données de sous-titrage associées auxdites données vidéo, lesdites données provenant d'un flux de données incluant en outre des références temporelles PCR en synchronisme avec une horloge ayant servi à cadencer le codage desdites données, ledit décodeur comportant
- un espace de stockage, lesdites données vidéo et de sous-titrage étant enregistrées sous forme multiplexées sur ledit espace de stockage,
- une première mémoire tampon fonctionnant en mode « premier entré - premier sorti » et apte à recevoir lesdites données vidéo sous forme de paquets,
- une deuxième mémoire tampon fonctionnant en mode « premier entré - premier sorti » et apte à recevoir lesdites données de sous-titrage sous forme de paquets,
- un démultiplexeur pour émettre lesdites données vidéo et lesdites données de sous-titrage respectivement vers ladite première et ladite deuxième mémoire tampon,
- une horloge locale,
ledit décodeur étant caractérisé en ce que ledit espace de stockage comporte des moyens pour stocker lesdites références temporelles de sorte que ledit démultiplexeur transmet également lesdites références temporelles, ledit décodeur incluant des moyens pour générer un horodatage de présentation associé à chaque paquet de données de sous-titrage ne contenant pas initialement d'horodatage de présentation, ledit horodatage de présentation étant déterminé à partir d'une valeur de référence temporelle émise par ledit démultiplexeur et permettant de synchroniser la présentation desdits paquets de données de sous-titrage par rapport à ladite horloge locale.

Grâce à l'invention, on associe à chaque paquet de sous-titrage ne possédant pas d'horodatage PTS (permettant la synchronisation) un horodatage reconstruit ; cet horodatage reconstruit est généré à partir d'une référence temporelle PCR. L'invention permet donc lors d'une lecture disque de synchroniser les sous-titres même s'ils ne contiennent pas de PTS, c'est-à-dire même s'ils n'ont pas été prévus à cet effet.

Le dispositif selon l'invention peut également présenter une ou plusieurs des caractéristiques ci-dessous, considérées individuellement ou selon toutes les combinaisons techniquement possibles.

Selon un premier mode de réalisation préférentiel, le décodeur selon l'invention comporte des moyens de mémorisation d'une variable de référence temporelle égale à la dernière référence temporelle reçue dudit multiplexeur, lesdits moyens pour générer un horodatage de présentation fixant la valeur dudit horodatage de présentation de chaque paquet de données de sous-titrage reçu dans ladite deuxième mémoire tampon à la valeur courante de ladite variable de référence temporelle.

Selon un deuxième mode de réalisation, le décodeur selon l'invention comporte des moyens de mémorisation d'une variable de référence temporelle égale à la dernière référence temporelle reçue dudit multiplexeur, lesdits moyens pour générer un horodatage de présentation fixant la valeur dudit horodatage de présentation de chaque paquet de données de sous-titrage reçu dans ladite deuxième mémoire tampon à la valeur qui suit la valeur courante de ladite variable de référence temporelle au moment de la réception dudit paquet dans ladite deuxième mémoire tampon.

Selon un troisième mode de réalisation, le décodeur selon l'invention comporte des moyens de mémorisation d'une variable de référence temporelle égale à la dernière référence temporelle reçue dudit multiplexeur, lesdits moyens pour générer un horodatage de présentation fixant la valeur dudit horodatage de présentation de chaque paquet de données de sous-titrage reçu dans ladite deuxième mémoire tampon à une combinaison de la valeur courante de ladite variable de référence temporelle et de la valeur qui suit la valeur courante de ladite variable de référence temporelle au moment de la réception dudit paquet dans ladite deuxième mémoire tampon.

De manière particulièrement avantageuse, le décodeur selon l'invention comporte une troisième mémoire tampon fonctionnant en mode « premier entré - premier sorti » et apte à contenir provisoirement lesdits horodatages de présentation générés, ladite troisième mémoire tampon contenant autant d'horodatages que le nombre de paquets de données de sous-titrage ne contenant pas initialement d'horodatage de présentation se trouvant dans ladite deuxième mémoire tampon.

Selon un mode de réalisation, lesdites données vidéo et de sous-titrage sont stockées dans ledit espace de stockage sous un format DVB.

Préférentiellement, le décodeur selon l'invention comporte une quatrième mémoire tampon fonctionnant en mode « premier entré - premier sorti » et apte à contenir provisoirement des données audio, lesdites données audio provenant également dudit flux de données incluant en outre les données vidéo, les données de sous-titrage et les références temporelle.

Avantageusement, le décodeur selon l'invention est un décodeur de télévision numérique.

La présente invention a également pour objet un procédé de décodage de données vidéo et de données de sous-titrage associées auxdites données vidéo, lesdites données provenant d'un flux de données incluant en outre des références temporelles en synchronisme avec une horloge ayant servi à cadencer le codage desdites données, lesdites données vidéo, de sous-titrage et lesdites références temporelles étant enregistrées sous forme multiplexées sur un espace de stockage, ledit procédé comportant les étapes suivantes :
- démultiplexage desdites données vidéo, desdites données de sous-titrage et desdites références temporelles,
- mise dans une première mémoire tampon fonctionnant en mode « premier entré - premier sorti » desdites données vidéo sous forme de paquets,
- mise dans une deuxième mémoire tampon fonctionnant en mode « premier entré - premier sorti » desdites données de sous-titrage sous forme de paquets,
- mémorisation d'une variable de référence temporelle égale à la dernière référence temporelle reçue dudit multiplexeur,
- mise dans une troisième mémoire tampon fonctionnant en mode « premier entré - premier sortie » d'un horodatage de présentation associé à chaque paquet de données de sous-titrage entrant dans ladite deuxième mémoire tampon et ne contenant pas initialement d'horodatage de présentation, ledit horodatage étant égal à la valeur de la dernière référence temporelle mémorisée et permettant de synchroniser la présentation desdits paquets de sous-titrage par rapport à une horloge locale.

### Brève description des figures

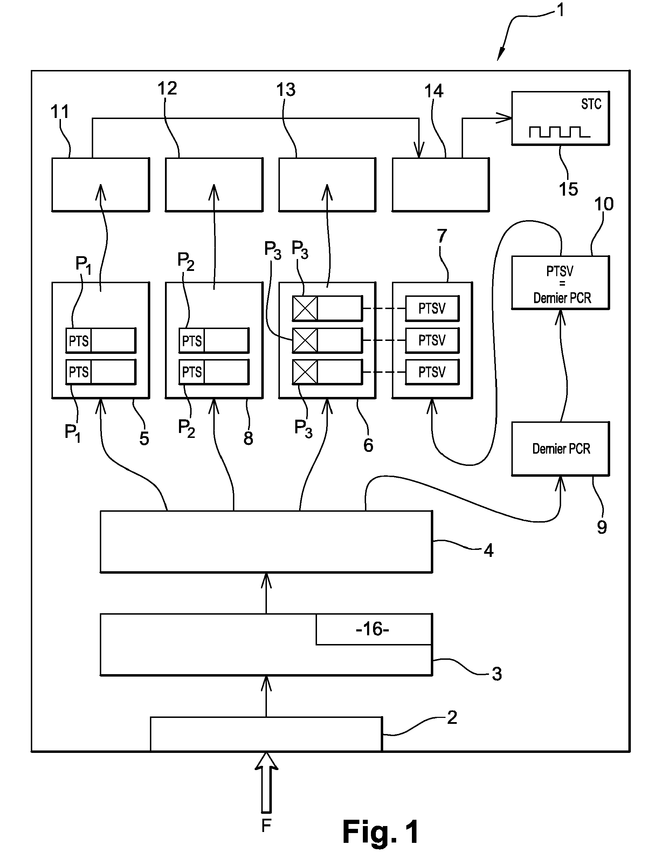

D'autres caractéristiques et avantages de l'invention ressortiront clairement de la description qui en est donnée ci-dessous, à titre indicatif et nullement limitatif, en référence à la figure 1 annexée qui est une représentation schématique simplifiée d'un décodeur selon l'invention pour la mise en oeuvre du procédé de codage selon l'invention.

### Description des formes de réalisation préférées de l'invention

La figure 1 représente schématiquement un décodeur de télévision numérique 1 prévu pour recevoir des flux de données F (utilisant par exemple une norme du type DVB). Le décodeur 1 permet non seulement de diffuser directement (en « live ») les programmes audiovisuels au téléspectateur ou les enregistrer sur un espace de stockage tel qu'un disque dur 3 de façon à les rendre accessibles au téléspectateur ultérieurement. On notera que la figure 1 ne représente que les fonctionnalités relatives au mode de réalisation lié au stockage des données.

Le décodeur 1 comporte :
- un module de réception 2 du flux de données F
- le disque dur 3,
- un démultiplexeur 4,
- quatre mémoires tampon 5, 6, 7 et 8,
- trois décodeurs 11, 12 et 13 prévus respectivement pour décoder les données vidéo, audio et de sous-titrage.

Chacune des mémoires tampon 5, 6, 7 et 8 est un buffer de type « premier entré - premier sorti » FIFO (« First In First Out »).

Le flux de données F après réception par le module de réception 2 est stocké sur le disque dur 3.

Le flux F comporte un ensemble de données vidéo, audio et de sous-titrage. Le flux F comporte également des signaux de référence temporelle notés PCR (pour « Program Clock Référence »). Ces références temporelles PCR sont insérées dans le flux de données en synchronisme avec une horloge qui cadence le codage des données. En lecture « live », les PCR permettent à l'aide d'un synthétiseur de fréquences ou d'un oscillateur commandé en tension noté VCXO (pour « Voltage Controlled Chrystal Oscilator ») de générer coté décodage une horloge de synchronisation STC. Dans le cas d'une lecture à partir du disque dur 3, les références temporelles ne sont pas utilisées pour générer l'horloge STC : le disque dur 3 comporte toutefois des moyens 16 pour conserver en mémoire les références PCR incorporées dans le flux F.

Comme nous l'avons expliqué en référence à l'état de la technique, les informations audio et vidéo comportent chacune des informations de synchronisation temporelles sous la forme d'horodatages de présentation ou PTS (« Présentation Time Stamps» en anglais »). Ainsi, après démultiplexage du flux F par le démultiplexeur 4, les paquets P1 de données vidéo comportant chacun un horodatage PTS sont envoyés vers la mémoire tampon 5. De même, les paquets P2 de données audio comportant chacun un horodatage PTS sont envoyés vers la mémoire tampon 8.

Le décodeur 1 comporte également une horloge locale 15 STC (« System Time Clock » en anglais) de synchronisation et des moyens 14 pour générer ladite horloge STC 15. La manière de générer l'horloge 15 STC est différente selon que l'on est en « live » ou en lecture du disque dur 3.

Ainsi, comme nous l'avons expliqué en référence à l'état de la technique, en live, on génère l'horloge STC grâce aux références temporelles PCR reçues dans le flux, et les paquets vidéo et audio se synchronisent sur l'horloge STC (i.e. les horodatages PTS des paquets reçus sont comparées avec l'horloge STC pour connaitre le bon moment pour jouer le paquet de données).

En lecture disque, comme le flux arrive à une vitesse artificielle, les références temporelles PCR ne sont pas des valeurs fiables. Dès lors, les paquets vidéo ne sont pas synchronisés et le décodeur vidéo 11 ne va donc plus tenir compte de l'horodatage PTS présent dans chaque paquet vidéo ; en revanche, le décodeur vidéo 11 va informer les moyens 14 de génération de l'horloge STC 15 de la valeur de l'horodatage PTS associé à chaque image affichée. Cet horodatage PTS va ensuite servir pour générer l'horloge locale 15 STC. Comme en « live », les paquets audio vont eux se synchroniser sur l'horloge 15. Ce procédé est un procédé connu sous le nom de « vidéo master ».

On notera qu'il est également possible d'utiliser les horodatages PTS des paquets audio pour générer l'horloge STC. Ce procédé est connu sous le nom de « audio master ».

Comme nous l'avons dit plus haut, la transmission des informations de synchronisation PTS n'est pas obligatoire dans le cas des données de sous-titrage/télétexte. Afin d'illustrer l'invention, nous traiterons ici uniquement du cas de paquets P3 de sous-titrage ne comportant pas d'horodatages PTS (l'absence de PTS est illustrée par la présence de X dans les paquets P3). Ces paquets P3 sont transmis par le démultiplexeur 4 vers la mémoire tampon 6.

Le décodeur 1 comporte des moyens 9 de mémorisation d'une variable de référence temporelle égale à la dernière référence temporelle PCR reçue du multiplexeur 4 : en d'autres termes, les moyens 9 permettent d'avoir accès en permanence à la dernière valeur du PCR.

Le décodeur 1 comporte également des moyens 10 pour générer un horodatage de présentation associé à chaque paquet de données de sous-titrage P3 reçu dans la mémoire tampon 6.

Ainsi, à chaque réception d'un paquet P3 dans la mémoire tampon 6, les moyens 10 vont interroger les moyens de mémorisation 9 et fixent la valeur d'horodatage associé au paquet P3 à la dernière valeur reçue du PCR (i.e. valeur courante de la variable de référence temporelle). On crée ainsi un horodatage virtuel (ou reconstruit) PTSV égal à la dernière valeur reçue de chaque valeur de référence PCR.

Chacun des horodatages PTSV est entré dans la mémoire tampon 7.

On comprend bien que la mémoire tampon 6 de paquets de sous-titrage comprend autant de paquets de sous-titrage sans horodatages STC que le nombre d'horodatages virtuels PTSV contenus dans la mémoire tampon 7.

La présence d'un horodatage associé au paquet de sous-titrage permet au décodeur 13 de données de sous-titrage de synchroniser les données de sous-titrage sur l'horloge locale STC 15.

On notera que les références PCR arrivent beaucoup plus souvent (au moins toutes les 100ms dans la norme DVB) que les paquets de soustitre. Dès lors, il apparaît clairement que chaque horodatage virtuel PTSV prendra une valeur différente de PCR et que de nombreuses valeurs de PCR ne seront pas utilisées par les moyens 10 de génération des PTSV.

Le buffer de données vidéo 5 est agencé pour être plein en permanence induisant de ce fait un délai de plusieurs secondes (la valeur de ce délai est directement dépendante de la taille du buffer vidéo 5 et du débit vidéo) entre l'entrée d'un paquet et sa sortie. Dès lors, l'heure donnée par une référence PCR qui vient d'être reçue est en avance de ces quelques secondes par rapport à l'horloge locale STC 15 générée à partir des images vidéo provenant du décodeur 11. En conséquence, le fait d'attribuer la valeur du dernier PCR reçu à l'horodatage de chaque paquet de sous-titrage constitue une bonne approximation et permet d'obtenir un résultat pratiquement aussi synchronisé qu'en lecture « live ».

Bien entendu, l'invention n'est pas limitée au mode de réalisation qui vient d'être décrit.

Notamment, les moyens représentés sur la figure 1 sont des unités fonctionnelles qui peuvent ou non correspondre à des unités physiquement distinguables. Par exemple, ces moyens peuvent être regroupés dans un unique composant, ou constituer des fonctionnalités d'un même logiciel. A contrario, certains moyens peuvent éventuellement être composés d'entités physiques séparées.

En outre, nous avons décrit un mode de réalisation dans lequel la valeur de l'horodatage virtuel est fixée à la valeur de la dernière référence PCR reçue. On peut toutefois envisager d'utiliser une autre valeur de PCR que la dernière reçue. Il peut par exemple s'agir de la référence reçue immédiatement après réception du paquet de sous-titrage ou d'une combinaison (moyenne) de la dernière valeur reçue et de la prochaine valeur reçue.

Par ailleurs, nous avons indiqué la présence d'un buffer destiné à stockée les horodatages virtuels PTSV. On peut également envisager de modifier le paquet de sous-titrage (en augmentant notamment sa taille) en amont de son entrée dans la mémoire tampon de données de sous-titrage afin de lui adjoindre directement l'horodatage virtuel PTSV.

Enfin, on pourra remplacer tout moyen par un moyen équivalent

## Revendications

1. Décodeur (1) de données vidéo et de données de sous-titrage associées auxdites données vidéo, lesdites données provenant d'un flux (F) de données incluant en outre des références temporelles en synchronisme avec une horloge ayant servi à cadencer le codage desdites données, ledit décodeur (1) comportant
- un espace de stockage (3), lesdites données vidéo et de sous-titrage étant enregistrées sous forme multiplexées sur ledit espace de stockage (3),
- une première mémoire tampon (5) fonctionnant en mode « premier entré - premier sorti » et apte à contenir provisoirement lesdites données vidéo sous forme de paquets (P1),
- une deuxième mémoire tampon (6) fonctionnant en mode « premier entré - premier sorti » et apte à contenir provisoirement lesdites données de sous-titrage sous forme de paquets (P3),
- un démultiplexeur (4) pour émettre lesdites données vidéo et lesdites données de sous-titrage respectivement vers ladite première et ladite deuxième mémoire tampon (5, 6),
- une horloge locale (15),
ledit décodeur (1) étant **caractérisé en ce que** ledit espace de stockage (3) comporte des moyens (16) pour stocker lesdites références temporelles de sorte que ledit démultiplexeur (4) transmet également lesdites références temporelles , ledit décodeur (1) incluant des moyens (10) pour générer un horodatage de présentation associé à chaque paquet (P3) de données de sous-titrage ne contenant pas initialement d'horodatage de présentation, ledit horodatage de présentation étant déterminé à partir d'une valeur de référence temporelle émise par ledit démultiplexeur (4) et permettant de synchroniser la présentation desdits paquets de données de sous-titrage (P3) par rapport à ladite horloge locale (15).

2. Décodeur (1) selon la revendication 1 **caractérisé en ce qu'**il comporte des moyens (9) de mémorisation d'une variable de référence temporelle égale à la dernière référence temporelle reçue dudit multiplexeur, (4), lesdits moyens (9) pour générer un horodatage de présentation fixant la valeur dudit horodatage de présentation de chaque paquet de données de sous-titrage (P3) reçu dans ladite deuxième mémoire tampon à la valeur courante de ladite variable de référence temporelle.

3. Décodeur selon la revendication 1 **caractérisé en ce qu'**il comporte des moyens de mémorisation d'une variable de référence temporelle égale à la dernière référence temporelle reçue dudit multiplexeur, lesdits moyens pour générer un horodatage de présentation fixant la valeur dudit horodatage de présentation de chaque paquet de données de sous-titrage reçu dans ladite deuxième mémoire tampon à la valeur qui suit la valeur courante de ladite variable de référence temporelle au moment de la réception dudit paquet dans ladite deuxième mémoire tampon.

4. Décodeur selon la revendication 1 **caractérisé en ce qu'**il comporte des moyens de mémorisation d'une variable de référence temporelle égale à la dernière référence temporelle reçue dudit multiplexeur, lesdits moyens pour générer un horodatage de présentation fixant la valeur dudit horodatage de présentation de chaque paquet de données de sous-titrage reçu dans ladite deuxième mémoire tampon à une combinaison de la valeur courante de ladite variable de référence temporelle et de la valeur qui suit la valeur courante de ladite variable de référence temporelle au moment de la réception dudit paquet dans ladite deuxième mémoire tampon.

5. Décodeur (1) selon l'une des revendications précédentes **caractérisé en ce qu'**il comporte une troisième mémoire tampon (7) fonctionnant en mode « premier entré - premier sorti » et apte à contenir provisoirement lesdits horodatages de présentation générés, ladite troisième mémoire tampon (7) contenant autant d'horodatages que le nombre de paquets de données de sous-titrage (P3) ne contenant pas initialement d'horodatage de présentation se trouvant dans ladite deuxième mémoire tampon (6).

6. Décodeur (1) selon l'une des revendications précédentes **caractérisé en ce que** ledit espace de stockage est prévu pour que lesdites données vidéo et de sous-titrage soient stockées sous un format DVB.

7. Décodeur (1) selon l'une des revendications précédentes **caractérisé en ce qu'**il comporte une quatrième mémoire tampon (8) fonctionnant en mode « premier entré - premier sorti » et apte à contenir provisoirement des données audio, lesdites données audio provenant également dudit flux (F) de données incluant en outre les données vidéo, les données de sous-titrage et les références temporelles.

8. Décodeur (1) selon l'une des revendications précédentes **caractérisé en ce que** ledit décodeur est un décodeur de télévision numérique.

9. Procédé de décodage de données vidéo et de données de sous-titrage associées auxdites données vidéo, lesdites données provenant d'un flux de données incluant en outre des références temporelles en synchronisme avec une horloge ayant servi à cadencer le codage desdites données, lesdites données vidéo, de sous-titrage et lesdites références temporelles étant enregistrées sous forme multiplexées sur un espace de stockage, ledit procédé comportant les étapes suivantes :
- démultiplexage desdites données vidéo, desdites données de sous-titrage et desdites références temporelles,
- mise dans une première mémoire tampon fonctionnant en mode « premier entré - premier sorti » desdites données vidéo sous forme de paquets,
- mise dans une deuxième mémoire tampon fonctionnant en mode « premier entré - premier sorti » desdites données de sous-titrage sous forme de paquets,
et charactérisé par
- mémorisation d'une variable de référence temporelle égale à la dernière référence temporelle reçue dudit multiplexeur,
- mise dans une troisième mémoire tampon fonctionnant en mode « premier entré - premier sortie » d'un horodatage de présentation associé à chaque paquet de données de sous-titrage entrant dans ladite deuxième mémoire tampon et ne contenant pas initialement d'horodatage de présentation, ledit horodatage étant égal à la valeur de la dernière référence temporelle mémorisée et permettant de synchroniser la présentation desdits paquets de sous-titrage par rapport à une horloge locale.

## Patentansprüche

1. Decodierer (1) von Videodaten und den genannten Videodaten zugeordneten Untertitelungsdaten, wobei die genannten Daten aus einem Datenstrom (F) stammen, der unter anderem zeitliche Referenzen im Synchronismus mit einem Zeitgeber einschließt, der zum Takten der Codierung der genannten Daten gedient hat, wobei der genannte Decodierer (1) umfasst
- einen Speicherplatz (3), wobei die genannten Video- und Untertitelungsdaten in multiplexierter Form auf dem genannten Speicherplatz (3) gespeichert sind,
- einen ersten Pufferspeicher (5), der im Modus "First In - First Out" funktioniert und geeignet ist, die genannten Videodaten vorübergehend in Paketform (P1) zu enthalten,
- einen zweiten Pufferspeicher (6), der im Modus "First In - First Out" funktioniert und geeignet ist, vorübergehend die genannten Untertitelungsdaten in Paketform (P3) zu enthalten,
- eine Demultiplexer (4), um die genannten Videodaten und die genannten Untertitelungsdaten jeweils zu dem genannten ersten und dem genannten zweiten Pufferspeicher (5, 6) zu senden,
- einen lokalen Zeitgeber (15),
wobei der genannten Decodierer (1) **dadurch gekennzeichnet ist, dass** der genannte Speicherplatz(3) Mittel (16) zum Speichern der genannten zeitlichen Referenzen derart umfasst, dass der genannte Demultiplexer (4) ebenfalls die genannten zeitlichen Referenzen überträgt, wobei der genannte Decodierer (1) Mittel (10) zum Generieren einer Präsentationszeitstempelung einschließt, die jedem Untertitelungsdatenpaket (P3) zugeordnet ist, das anfänglich keine Präsentationszeitstempelung enthält, wobei die genannte Präsentationszeitstempelung ausgehend von einem zeitlichen Referenzwert bestimmt ist, der von dem genannten Demultiplexer (4) gesendet wird und die Synchronisation der Präsentation der genannten Untertitelungsdatenpakete (P3) im Verhältnis zu dem genannten lokalen Zeitgeber (15) zu synchronisieren.

2. Decodierer (1) gemäß Anspruch 1, **dadurch gekennzeichnet, dass** er Speichermittel (9) einer zeitlichen Referenz gleich der letzten zeitlichen Referenz umfasst, die von dem genannten Multiplexer (4) empfangen wird, wobei die genannten Mittel (9) zum Generieren einer Präsentationszeistempelung den Wert der genannten Zeitstempelung jedes Untertitelungsdatenpakets (P3) festlegen, das in dem genannten zweiten Pufferspeicher zu dem aktuellen Wert der genannten zeitlichen Referenzvariablen empfangen wird.

3. Decodierer gemäß Anspruch 1, **dadurch gekennzeichnet, dass** er Speichermittel einer zeitlichen Referenzvariablen gleich der letzten, von dem genannten Multiplexer empfangenen zeitlichen Referenz umfasst, wobei die genannten Mittel zum Generieren einer Präsentationszeitstempelung den Wert der genannten Präsentationszeitstempelung jedes Untertitelungsdatenpakets festsetzt, das in dem genannten zweiten Pufferspeicher zu dem Wert empfangen wird, der dem aktuellen Wert der genannten zeitlichen Referenzvariablen zu dem Zeitpunkt des Empfangs des genannten Pakets in dem genannten zweiten Pufferspeicher folgt.

4. Decodierer gemäß Anspruch 1, **dadurch gekennzeichnet, dass** er Speichermittel einer zeitlichen Referenzvariablen gleich der letzten, von dem genannten Multiplexer empfangenen zeitlichen Referenz umfasst, wobei die genannten Mittel zum Generieren einer Präsentationszeitstempelung den Wert der genannten Präsentationszeitstempelung jedes Untertitelungsdatenpakets festsetzten, das in dem genannten zweiten Pufferspeicher in einer Kombination des aktuellen Wertes der genannten zeitlichen Referenzvariablen und des Wertes empfangen wird, der dem aktuellen Wert der genannten zeitlichen Referenzvariablen zu dem Zeitpunkt des Empfangs des genannten Pakets in dem genannten zweiten Pufferspeicher folgt.

5. Decodierer (1) gemäß einem der voranstehenden Ansprüche, **dadurch gekennzeichnet, dass** er einen dritten Pufferspeicher (7) umfasst, der im Modus "First In - First Out" funktioniert und der geeignet ist, vorläufig die genannten generierten Präsentationszeitstempelungen zu enthalten, wobei der genannte dritte Pufferspeicher (7) ebenso viele Zeitstempelungen enthält wie die Anzahl von Untertitelungsdatenpakten (P3), die anfänglich keine Präsentationszeitstempelung enthalten, die sich in dem genannten zweiten Pufferspeicher (6) befindet.

6. Decodierer (1) gemäß einem der voranstehenden Ansprüche, **dadurch gekennzeichnet, dass** der genannte Speicherplatz vorgesehen ist, damit die genannten Video- und Untertitelungsdaten im Format DVB gespeichert werden.

7. Decodierer (1) gemäß einem der voranstehenden Ansprüche, **dadurch gekennzeichnet, dass** er einen vierten Pufferspeicher (8) umfasst, der im Modus "First In - First Out" funktioniert und geeignet ist, vorübergehend Audiodaten zu enthalten, wobei die genannten Audiodaten ebenfalls aus dem genannten Datenstrom (F) stammen, der darüber hinaus die Videodaten, die Untertitelungsdaten und die zeitlichen Referenzen umfasst.

8. Decodierer (1) gemäß einem der voranstehenden Ansprüche, **dadurch gekennzeichnet, dass** der genannte Decodierer ein Decodierer des digitalen Fernsehens ist.

9. Decodierungsverfahren von Videodaten und Untertitelungsdaten, die den genannten Videodaten zugeordnet sind, wobei die genannten Daten aus einem Datenstrom stammen, der darüber hinaus zeitliche Referenzen im Synchronismus mit einem Zeitgeber einschließt, der zum Takten der Codierung der genannten Daten mit einem Zeitgeber gedient hat, wobei die genannten Video-, Untertitelungsdaten und die genannten zeitlichen Referenzen in multiplexierter Form auf einem Speicherplatz abgespeichert sind, wobei das genannte Verfahren die folgenden Stufen umfasst:
- Demultiplexen der genannten Videodaten, der genannten Untertitelungsdaten und der genannten zeitlichen Referenzdaten,
- Einstellen der genannten Videodaten in Paketform in einen ersten Pufferspeicher, der im Modus "First In - First Out" funktioniert,
- Einstellen der genannten Untertitelungsdaten in Paketform in einen zweiten Pufferspeicher, der im Modus "First In - First Out" funktioniert, und **gekennzeichnet durch**
- Abspeichern einer zeitlichen Referenzvariablen gleich der letzten, von dem genannten Multiplexer empfangenen zeitlichen Referenz,
- Einstellen einer Präsentationszeitstempelung, die jedem Untertitelungsdatenpaket zugeordnet ist, das in den genannten zweiten Pufferspeicher eintritt und anfänglich keine Präsentationzeitstempelung enthält, in einen dritten Pufferspeicher, der im Modus "First In - First Out" funktioniert, wobei die genannte Zeitstempelung gleich dem Wert des letzten abgespeicherten zeitlichen Referenzwertes ist und die Synchronisation der Präsentation der genannten Untertitelungspakete im Verhältnis zu einem lokalen Zeitgeber zulässt.

## Claims

1. Decoder (1) for decoding video data and subtitle data associated with the video data, said data resulting from a data flow (F) further including time references in synchronisation with a clock having been used to synchronize the coding of said data, with said decoder (1) comprising
- a storage space (3), the video and subtitle data being stored in a multiplexed form in said storage space (3),
- a first buffer memory (5) operating in a "first in - first out" mode and capable of temporarily storing the video data in the form of packets (P1),
- a second buffer memory (6) operating in a "first in - first out" mode and capable of temporarily storing the subtitle data in the form of packets (P3),
- a demultiplexer (4) for transmitting the video data and the subtitle data respectively to the first and second buffer memories (5, 6),
- a local clock (15),
said decoder (1) being **characterised in that** said storage space (3) comprises means (16) for storing said time references in such a way that said demultiplexer (4) also transmits said time references, said decoder (1) including means (10) for generating a presentation timestamp associated with each subtitle data packet (P3) that does not initially include a presentation timestamp, said presentation timestamp being determined on the basis of a time reference value transmitted by said demultiplexer (4) and making it possible to synchronise the presentation of the subtitle data packets (P3) with respect to said local clock (15).

2. Decoder (1) according to claim 1 **characterised in that** it comprises means (9) for storing a time reference variable equal to the last time reference received from said multiplexer (4).
with said means (9) for generating a presentation timestamp setting the value of said presentation timestamp of each subtitle data packet (P3) received in said second buffer memory to the current value of said time reference variable.

3. Decoder according to claim 1 **characterised in that** it comprises means for storing a time reference variable equal to the last time reference received from said multiplexer, with said means for generating a presentation timestamp setting the value of said presentation timestamp of each subtitle data packet received in said second buffer memory to the value that follows the current value of said time reference variable at the time of reception of said packet in said second buffer memory.

4. Decoder according to claim 1 **characterised in that** it comprises means for storing a time reference variable equal to the last time reference received from said multiplexer, with said means for generating a presentation timestamp setting the value of said presentation timestamp of each subtitle data packet received in said second buffer memory to a combination of the current value of said time reference variable and of the value that follows the current value of said time reference variable at the time of reception of said packet in said second buffer memory.

5. Decoder (1) according to one of the preceding claims **characterised in that** it comprises a third buffer memory (7) operating in a "first in - first out" mode and capable of temporarily storing said generated presentation timestamps, said third buffer memory (7) containing as many timestamps as the number of subtitle data packets (P3) that does not initially include a presentation timestamp located in said second buffer memory (6).

6. Decoder (1) according to one of the preceding claims **characterised in that** said storage space is provided so that said video and subtitle data be stored in a DVB format.

7. Decoder (1) according to one of the preceding claims **characterised in that** it comprises a fourth buffer memory (8) operating in a "first in - first out" mode and capable of temporarily storing audio data, said audio data also resulting from said data flow (F) further including the video data, the subtitle data and the time references.

8. Decoder (1) according to one of the preceding claims **characterised in that** said decoder is a digital television decoder.

9. Method for decoding video data and subtitle data associated with the video data, said data resulting from a data flow further including time references in synchronisation with a clock having been used to clock the coding of said data, with said video and subtitle data and said time references being stored in a multiplexed form on a storage space, said method comprising the following steps:
- demultiplexing said video data, said subtitle data and said time references,
- putting into a first buffer memory operating in a "first in - first out" mode of said video data in the form of packets,
- putting into a second buffer memory operating in a "first in - first out" mode of said subtitle data in the form of packets,
and **characterised by**
- storing a time reference variable equal to the last time reference received from said multiplexer,
- putting into a third buffer memory operating in a "first in - first out" mode of a presentation timestamp associated with each subtitle data packet entering into said second buffer memory and that does not initially include a presentation timestamp, with said timestamp being equal to the value of the last time reference memorised and making it possible to synchronise the presentation of said subtitle packets with respect to a local clock.
